# EUROPÄISCHE PATENTSCHRIFT

(11) **EP 2 206 569 B1**
(45) Veröffentlichungstag und Bekanntmachung des Hinweises auf die Patenterteilung: **22.06.2011**
(21) Anmeldenummer: 09175469.7
(22) Anmeldetag: 10.11.2009
(51) Int. Cl.: B23B 3/06, B23Q 39/04, B23B 3/30, B23D 21/00

(54) **Verfahren zur Herstellung mehrerer bearbeiteter Werkstücke aus einem Rohteil**
Method for producing several machined workpieces from an unmachined part
Procédé de fabrication de plusieurs pièces usinées à partir d'une ébauche

(30) Priorität: 13.01.2009 DE 102009004463
(43) Veröffentlichungstag der Anmeldung: 14.07.2010
(73) Patentinhaber: MAG IAS GmbH, 73033 Göppingen (DE)
(72) Erfinder: Bender, Günter, 65321 Heidenrod (DE); Göbel, Uwe, 65329 Hohenstein (DE)
(74) Vertreter: Rau, Albrecht

(56) Entgegenhaltungen:
- DE-A1- 2 546 819
- DE-A1- 4 316 166
- US-A- 5 842 393

## Beschreibung

Die Erfindung betrifft ein Verfahren , bei dem mittels einer Werkzeugmaschine aus einem zu bearbeitenden Rohteil, mehrere fertig bearbeitete Werkstücke herstellbar sind.

Aus der DE 43 16 166 A1 ist eine derartige Werkzeugmaschine bekannt,
- mit einem Maschinen-Gestell,
- mit einem am Maschinen-Gestell in einer horizontalen x-Richtung verfahrbaren Werkstück-Schlitten,
   - der eine um eine in einer vertikalen z-Richtung verlaufende erste Spindel-Achse mittels eines ersten Spindel-Antriebs-Motors drehantreibbare Werkstück-Spann-Einrichtung aufweist,
- mit einem am Maschinen-Gestell unterhalb des Werkstück-Schlittens angeordneten, zur Aufnahme mehrerer Werkzeuge ausgebildeten ersten Werkzeug-Halter,
- mit einer am Maschinen-Gestell unterhalb des Werkstück-Schlittens angeordneten ortsfesten zweiten Werkstück-Spindel,
   - die eine um eine in z-Richtung verlaufende zweite Spindel-Achse mittels eines zweiten Spindel-Antriebs-Motors drehantreibbare zweite Werkstück-Spann-Einrichtung aufweist,
- einem am Maschinen-Gestell in x-Richtung verfahrbaren Werkzeug-Schlitten,
   - der einen in z-Richtung verfahrbaren, zur Aufnahme mindestens eines Werkzeugs ausgebildeten zweiten Werkzeug-Halter aufweist.

Aus der US 5,842,393 A ist eine Werkzeugmaschine bekannt, auf der auf einer ersten Spindel ein Rohling aufgenommen und mittels Werkzeug bearbeitet wird, das in einem Werkeug-Halter gehalten ist, der an einem am Maschinen-Gestell in x-Richtung und y-Richtung verfahrbaren Werkzeug-Schlitten angebracht ist. Nach dieser ersten Bearbeitung wird das Werkstück von einem Werkstück-Schlitten mit einer zweiten Werkstück-Spindel übernommen und mittels Werkzeugen bearbeitet, die an einem zweiten Werkzeug-Schlitten angebracht sind. Anschließend erfolgt die Umsetzung des Werkstücks in eine dritte Werkstück-Spindel, die ebenfalls an einem Werkstück-Schlitten angebracht ist. Es wird dann die andere Seite des Werkstücks bearbeitet.

Der Erfindung liegt die Aufgabe zugrunde, ein Verfahren der gattungsgemäßen Art zu schaffen, mittels dessen mit einfachen Mitteln aus einem Rohteil mehrere fertig bearbeitete Werkstücke herstellbar sind.

Diese Aufgabe wird durch ein Verfahren nach dem Anspruch 1 gelöst.

Der Kern der Erfindung liegt darin, dass die aus der DE 43 16 166 A 1 bekannte Werkzeugmaschine mit einer Steuerung versehen wird, mittels derer die Bearbeitung des Rohteils mit den Werkzeugen des ersten Werkzeug-Halters so gesteuert wird, dass nicht nur der untere Bereich des aus dem Rohteil abzutrennenden Teil-Werkstücks an seiner Unterseite bearbeitet, sondern auch eine Nut in das Rohteil eingestochen wird. Zwischen den beiden Werkstück-Spindeln erfolgt nicht nur eine Übergabe von der ersten Werkstück-Spindel auf die zweite Werkstück-Spindel, sondern beide Werkstück-Spindeln werden mit dem eingespannten Werkstück mit unterschiedlicher Drehzahl angetrieben, sodass der nach dem Einstechen der Nut verbliebene dünne Trenn-Steg mittels Trennbruchs zerstört wird. Das noch fertig zu bearbeitende Werkstück ist also von dem Rohteil abgetrennt. Anschließend erfolgt die Fertigbearbeitung dieses abgetrennten Teil-Werkstücks zu dem fertig bearbeiteten Werkstück.

Besonders bevorzugt werden durch das erfindungsgemäße Verfahren aus Rohrstücken Rohteil-Ringe hergestellt.

Die Erfindung betrifft also auch die Verwendung der aus der DE 43 16 166 C5 bekannten Werkzeugmaschine, und zwar hinausgehend über die Bearbeitungsschritte zur Durchführung eines Trennbruchs. Das Rohteil wird nämlich nicht insgesamt von der ersten Werkstück-Spindel an die zweite Werkstück-Spindel übergeben, sondern verbleibt nach Abtrennen des fertig zu bearbeitenden Teil-Werkstücks in der ersten Werkstück-Spann-Einrichtung der ersten Werkstück-Spindel.

Weitere Merkmale, Vorteile und Einzelheiten ergeben sich aus der nachfolgenden Beschreibung eines Ausführungsbeispiels anhand der Zeichnungen.

Es zeigt
- Fig. 1: eine Frontansicht einer erfindungsgemäßen Werkzeugma- schine in einer ersten Bearbeitungsposition,

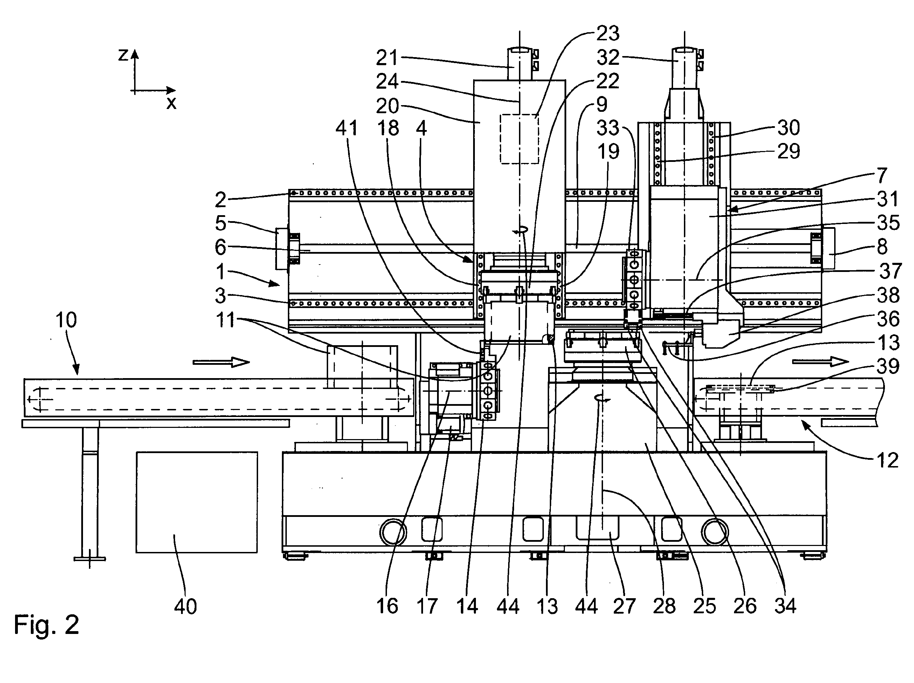

- Fig. 2: eine Frontansicht der Werkzeugmaschine nach Fig. 1 in einer zweiten Bearbeitungsposition,
- Fig. 3: eine Frontansicht der Werkzeugmaschine nach den Fig. 1 und 2 in einer dritten Bearbeitungsposition,

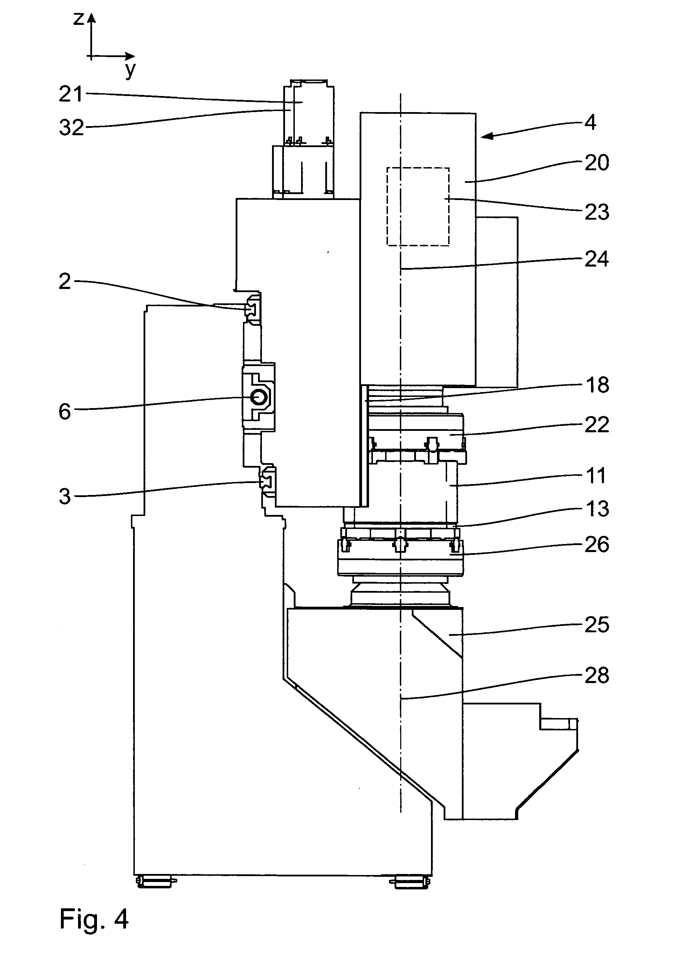

- Fig. 4: einen vertikalen Querschnitt durch die Werkzeugmaschine entsprechend der Schnittlinie IV-IV in Fig. 3 und

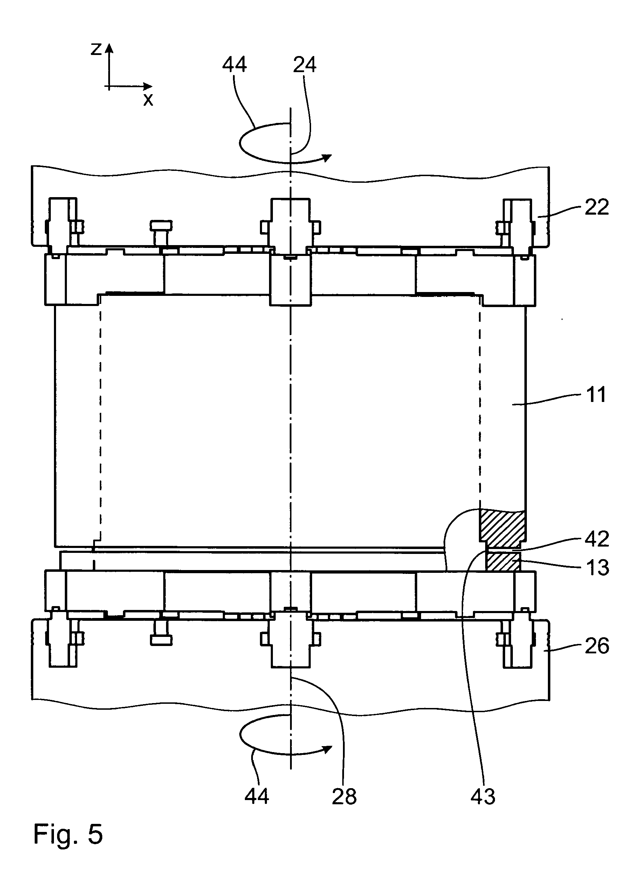

- Fig. 5: eine vergrößerte Teildarstellung aus Fig. 3.

Die in der Zeichnung dargestellte Werkzeugmaschine weist ein Maschinen-Gestell 1 auf, in dessen oberem Bereich in vertikalem Abstand übereinander horizontal verlaufende x-FÜhnmgs-Schienen 2, 3 angebracht sind, auf denen ein Werkstück-Schlitten 4 horizontal, also in x-Richtung, verschiebbar gelagert ist. Der Horizontal-Antrieb des Schlittens 4 erfolgt mittels eines ersten x-Antriebs-Motors 5 über einen ersten Spindel-Trieb 6.

Auf den x-FÜhrungsschienen 2, 3 ist weiterhin ein Werkzeug-Schlitten 7 horizontal verfahrbar angeordnet, dessen Antrieb mittels eines zweiten x-Motors 8 über einen zweiten Spindel-Trieb 9 erfolgt.

Auf der dem Werkstück-Schlitten 4 zugewandten Seite des Maschinen-Gestells 1 wird in dieses unterhalb der x-Führungs-Schienen 2, 3 eine Zuführ-Einrichtung 10 für zu bearbeitende Rohteil 11 eingeführt. An der dem Werkzeug-Schlitten 7 zugewandten Seite des Maschinen-Gestells 1 mündet aus diesem eine Abführ-Einrichtung 12 für fertig bearbeitete Werkstücke 13, also für Fertigteile.

Benachbart zur Zuführ-Einrichtung 10 ist am Maschinen-Gestell 1 unterhalb der x-Führungsschienen 2, 3 ein als Werkzeug-Revolver ausgebildeter erster Werkzeug-Halter 14 angeordnet, der eine größere Zahl von Werkzeugen 15 aufnimmt. Der um eine horizontale in x-Richtung verlaufende Achse 16 drehbare erste Werkzeug-Halter 14 wird mittels eines Stellmotors 17 in der Art verdreht, dass das oder die jeweils gewünschten Werkzeuge 15 zum Einsatz gebracht werden können.

Der Werkstück-Schlitten 4 weist vertikal in z-Richtung verlaufende erste z-Führungs-Scliienen 18, 19 auf, auf denen eine erste Werkstück-Spindel 20 mittels eines ersten z-Antriebs-Motors 21 vertikal verfahrbar angeordnet ist. Die erste Werkstück-Spindel 20 weist eine erste Werkstück-Spann-Einrichtung 22, ein Spannfutter, auf, die mittels eines ersten Spindel-Antriebs-Motors 23 um eine vertikale, also in z-Richtung verlaufende erste Spindel-Achse 24, drehantreibbar ist.

Zwischen dem ersten Werkzeug-Halter 14 und der Abführ-Einrichtung 12 ist am Maschinen-Gestell 1 eine ortsfeste zweite Werkstück-Spindel 25 angebracht, die eine zweite Werkstück-Spann-Einrichtung 26, also ebenfalls ein Spannfutter, aufweist, die mittels eines zweiten Spindel-Antriebs-Motors 27 um eine in z-Richtung verlaufende zweite Spindel-Achse 28 drehantreibbar ist. Diese zweite Spindel-Achse 28 ist - bezogen auf die y-Richtung - deckungsgleich mit der ersten Spindel-Achse 24, sodass durch entsprechendes Verfahren des Werkstück-Schlittens 4 die Spindel-Achsen 24 und 28 in eine fluchtende Lage zueinander gebracht werden können.

Der Werkzeug-Schlitten 7 weist ebenfalls in vertikaler z-Richtung verlaufende zweite z-Führungsschienen 29, 30 auf, auf denen ein Werkzeug-Träger 31 in vertikaler Richtung mittels eines zweiten z-Antriebs-Motors 32 verschiebbar angeordnet ist. Am Werkzeug-Träger 31 ist ein als Werkzeug-Revolver ausgebildeter zweiter Werkzeug-Halter 32 angebracht, der eine größere Zahl von Werkzeugen 33 aufnehmen kann. Er ist - wie der erste Werkzeug-Halter 14 - um eine in x-Richtung verlaufende Achse 35 mittels eines nicht dargestellten Stellmotors drehantreibbar. Am Werkzeug-Schlitten 31 ist weiterhin ein Werkstück-Greifer 36 angebracht, der auf einer in x-Richtung verlaufenden Zustell-Schiene 37 mittels eines Zustell-Antriebs 38 verfahrbar ist.

Unterhalb des Werkzeug-Schlittens 7 ist am Beginn der Abführ-Einrichtung 12 eine vertikal, also in z-Richtung, verfahrbare Werkstück-Ablege-Einrichtung 39 vorgesehen, mittels derer fertig bearbeitete Werkstücke 13 vom Greifer 36 übernommen und auf der Abführ-Einrichtung 12 abgelegt werden können.

Alle Motoren und die über sie ausgeführten Arbeitsabläufe werden über eine zentrale Steuerung 40 gesteuert.

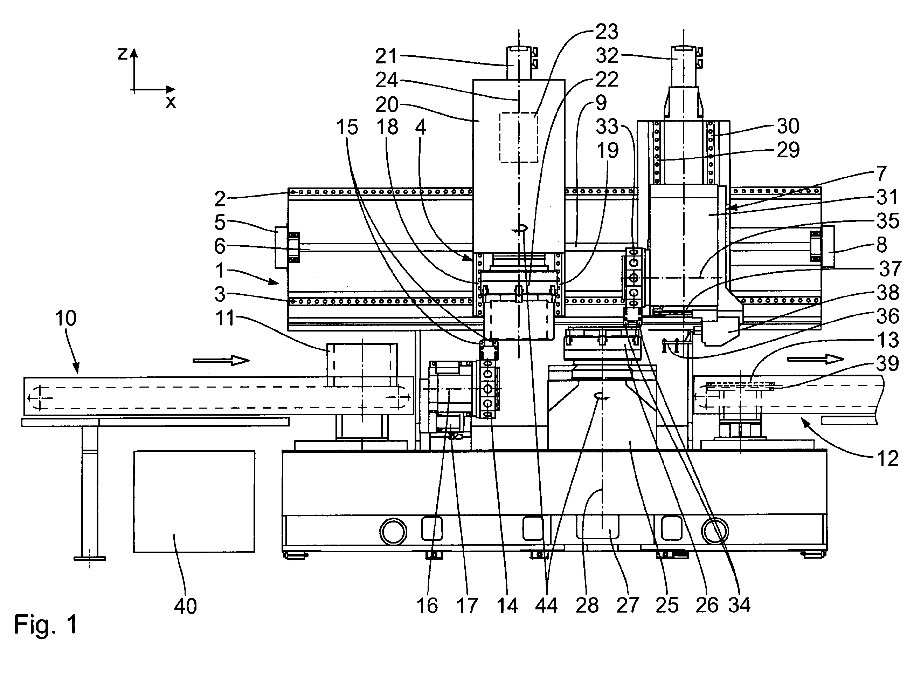

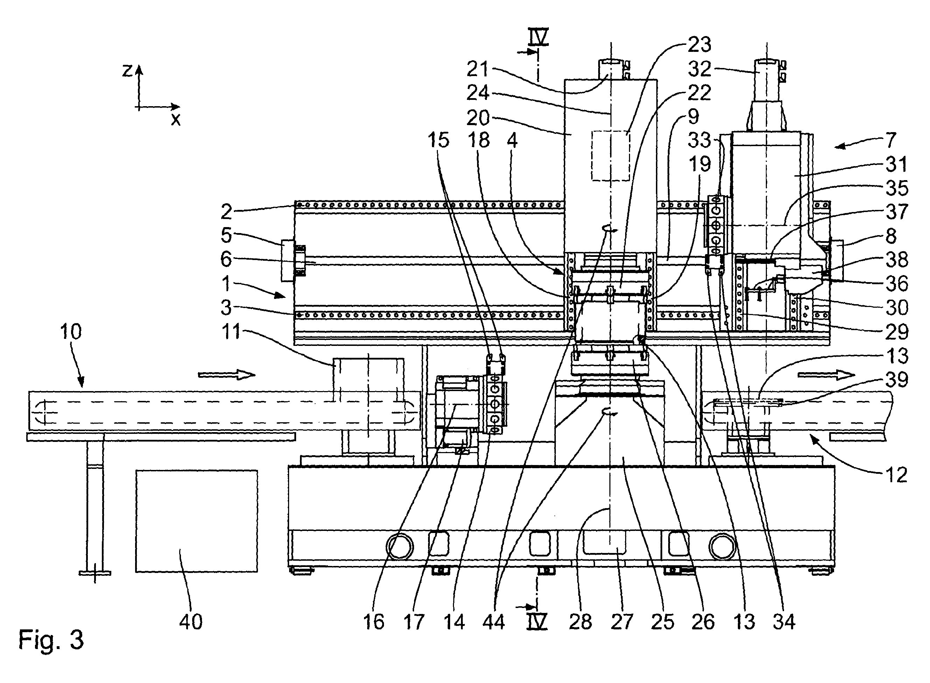

Die Arbeitsweise ist wie folgt:
Der Werkstück-Schlitten 4 wird soweit bis zur Zuführ-Einrichtung 10 hin verfahren, dass er mittels der ersten Werkstück-Spann-Einrichtung 22 ein auf der Zufuhr-Einrichtung 10 herangefördertes zu bearbeitendes Rohteil 11 aufnehmen kann. Anschließend verfährt der Werkstück-Schlitten 4 in die in Fig. 1 dargestellte Position, wo der erste Werkzeug-Halter 14 mit seinem Werkzeug 15 zum Einsatz kommt, wobei die Unterseite des Rohteils 11 spanend bearbeitet wird. Dieser Teil des Werkstücks 11 bildet später die bearbeitete Unterseite des abzutrennenden Teil-Werkstücks 13. Anschließend wird mittels eines weiteren im ersten Werkzeug-Halter 14 eingespannten Werkzeugs 41 an einer vorgegebenen Stelle im unteren Bereich des Werkstücks 11 eine Nut 42 radial zur ersten Spindel-Achse 24 in das Werkstück 11 eingestochen, sodass nur ein sehr dünner Steg 43 zwischen dem verbleibenden Rohteil 11 und dem noch nicht fertig bearbeiteten Werkstück 13 verbleibt. Dieser Steg 43 hat eine Dicke von weniger als 1 mm. Anschließend wird der Werkstück-Schlitten 4 in die in Fig. 3 dargestellte Position über der zweiten Werkstück-Spindel 25 verfahren, und zwar derart, dass deren Achsen 24 und 28 miteinander fluchten. Das noch mit dem Rohteil 11 verbundene Teil-Werkstück 13 wird in die zweite Werkstück-Spann-Einrichtung 26 eingespannt, wobei beide Spindeln 20, 25, das heißt also ihre Spann-Einrichtungen 22 und 26, gleichsinnig in Richtung 44 angetrieben werden. Zum Trennen der Werkstücke 11 und 13 voneinander wird eine Drehzahl relativ zur anderen derart verändert, dass ein Trennbruch zwischen den Werkstücken 11 und 13 eintritt. Der Werkstück-Schlitten 4 wird mit dem verbliebenen Rohteil 11 zurück über den ersten Werkzeug-Halter 14 in die in Fig. 1 dargestellte Position verfahren, wo mittels der Werkzeuge 15 eine erneute Bearbeitung des unteren Randbereichs des Werkstücks 11 erfolgt.

Zeitgleich wird der Werkzeug-Schlitten 7 in die in Fig. 1 dargestellte Position verfahren, wo mittels des Werkzeugs oder der Werkzeuge 34 eine Bearbeitung der Oberseite des Werkstücks 13 erfolgt. Am Ende dieses Bearbeitungsvorgangs ist das vom Rohteil 11 abgebrochene, zu bearbeitende Werkstück 13 fertig bearbeitet. Durch entsprechendes Verfahren des Werkzeug-Schlittens 7 mit dem Werkzeug-Träger 31 und ggf. des Werkstück-Greifers 36 wird der Werkstück-Greifer 36 mit dem fertig bearbeiteten Werkstück 13 in Eingriff gebracht. Die zweite Werkstück-Spann-Einrichtung 26 wird gelöst. Der Werkzeug-Träger 31 wird nach oben verfahren und der Werkzeug-Schlitten 7 anschließend in x-Richtung zur Abführ-Einrichtung 12 hin. Die Werkstück-Ablege-Einrichhtung 39 wird nach oben verfahren und übernimmt vom Werkstück-Greifer 36 das fertig bearbeitete Werkstück 13.

Dieser Arbeitsablauf wiederholt sich so oft, bis aus dem Rohteil 11 mehrere fertig bearbeitete Werkstücke 13 hergestellt sind. Bei den Werkstücken 11 handelt es sich bevorzugt um Rohr-Stücke, aus denen als fertig bearbeitete Werkstücke 13 Ringe hergestellt werden, wie es dargestellt ist.

## Patentansprüche

1. Verfahren zur Herstellung mehrerer bearbeiteter Werkstücke (13) aus einem Rohteil (11) auf einer Werkzeugmaschine
- mit einem Maschinen-Gestell (1),
- mit einem am Maschinen-Gestell (1) in einer horizontalen x-Richtung verfahrbaren Werkstück-Schlitten (4),
- - der eine um eine in einer vertikalen z-Richtung verlaufende erste Spindel-Achse (24) mittels eines ersten Spindel-Antriebs-Motors (23) drehantreibbare Werkstück-Spann-Einrichtung (22) aufweist,
- mit einem am Maschinen-Gestell (1) unterhalb des Werkstück-Schlittens (4) angeordneten, zur Aufnahme mehrerer Werkzeuge (15, 41) ausgebildeten ersten Werkzeug-Halter (14),
- mit einer am Maschinen-Gestell (1) unterhalb des Werkstück-Schlittens (4) angeordneten ortsfesten zweiten Werkstück-Spindel (25),
- - die eine um eine in z-Richtung verlaufende zweite Spindel-Achse (28) mittels eines zweiten Spindel-Antriebs-Motors (27) drehantreibbare zweite Werkstück-Spann-Einrichtung (26) aufweist,
- einem am Maschinen-Gestell (1) in x-Richtung verfahrbaren Werkzeug-Schlitten (7),
- - der einen in z-Richtung verfahrbaren, zur Aufnahme mindestens eines Werkzeugs (34) ausgebildeten zweiten Werkzeug-Halter (33) aufweist,
- wobei mittels mindestens eines im ersten Werkzeug-Halter (14) gehaltenen Werkzeugs (15, 41) ein zu bearbeitendes Rohteil (11) an seiner Unterseite bearbeitet und mit einer eingestochenen Nut (42) unter Verbleib eines dünnen Stegs (43) versehen wird,
- wobei der Werkstück-Schlitten (4) mit dem Rohteil (11) über die ortsfeste zweite Werkstück-Spindel (25) verfahren wird,
- wobei das Rohteil (11) unterhalb der Nut (42) in die zweite Werkstück-Spann-Einrichtung (26) eingespannt wird,
- wobei die erste Werkstück-Spindel (20) und die zweite Werkstück-Spindel (25) derart mit unterschiedlicher Drehzahl angetrieben werden, dass von dem Rohteil (11) unter Durchtrennung des Steges (43) ein Werkstück (13) abgerissen wird und
- wobei das abgerissene Werkstück (13) mittels mindestens des zweiten Werkzeug-Halters (33) an seiner Oberseite fertig bearbeitet wird und
- wobei der Werkstück-Schlitten (4) mit dem Rohteil (11) zum ersten Werkzeug-Halter (14) zur Durchführung eines weiteren Bearbeitungsschrittes zurückverfahren wird.

2. Verfahren nach Anspruch 1, wobei das Rohteil (11) als Rohrstück ausgebildet ist und wobei die fertig bearbeiteten Werkstücke (13) Ringe sind.

## Claims

1. Method for the production of a plurality of machined workpieces (13) from a blank (11) using a machine tool comprising
- a machine frame (1);
- a workpiece carriage (4) which is displaceable along the machine frame (1) in a horizontal x-direction, the workpiece carriage (4) comprising
- - a workpiece clamping device (22) which is drivable for rotation about a first spindle axis (24) by means of a first spindle drive motor (23), the first spindle axis (24) extending in a vertical z-direction;
- a first tool holder (14) which is arranged on the machine frame (1) below the workpiece carriage (4) for accommodating a plurality of tools (15, 41);
- a stationary second workpiece spindle (25) which is arranged on the machine frame (1) below the workpiece carriage (4), the second workpiece spindle (25) comprising
- - a second workpiece clamping device (26) which is drivable for rotation about a second spindle axis (28) by means of a second spindle drive motor (27), the second spindle axis (28) extending in the z-direction;
- a tool carriage (7) which is displaceable along the machine frame (1) in the x-direction, the tool carriage (7) comprising
- - a second tool holder (33) which is displaceable in the z-direction and is able to accommodate at least one tool (34),
- wherein the lower side of a blank (11) to be machined is machined by means of at least one tool (15, 41), which is held in the first tool holder (14), and is provided with a cut groove (42) so that a thin web (43) remains;
- wherein the workpiece carriage (4) is moved together with the blank (11) across the stationary second workpiece spindle (25);
- wherein the blank (11) is clamped into the second workpiece clamping device (26) below the groove (42);
- wherein the first workpiece spindle (20) and the second workpiece spindle (25) are driven at different speeds in such a way that a workpiece (13) is torn off the blank (11) by separation of the web (43); and
- wherein the upper side of the torn-off workpiece (13) is finished by means of at least the second tool holder (33); and
- wherein the workpiece carriage (4), together with the blank (11), is moved back to the first tool holder (14) in order to perform another machining step.

2. Method according to claim 1,
wherein the blank (11) is a pipe; and
wherein the finished workpieces (13) are rings.

## Revendications

1. Procédé de fabrication de plusieurs pièces usinées (13) à partir d'une ébauche (11) sur une machine-outil comprenant
- un bâti de machine (1),
- un chariot porte-pièce (4) pouvant être déplacé sur le bâti de machine (1) dans un sens horizontal x,
- - qui présente un dispositif de serrage de pièces (22) pouvant être entraîné en rotation autour d'un premier axe de broche (24) s'étendant dans un sens vertical z au moyen d'un premier moteur d'entraînement de broche (23),
- un premier porte-outil (14) réalisé pour la réception de plusieurs outils (15, 41), disposé sur le bâti de machine (1) au-dessous du chariot porte-pièce (4),
- une seconde broche porte-pièce (25) fixe disposée sur le bâti de machine (1) au-dessous du chariot porte-pièce (4),
- - qui présente un second dispositif de serrage de pièces (26) pouvant être entraîné en rotation autour d'un second axe de broche (28) s'étendant dans le sens z au moyen d'un second moteur d'entraînement de broche (27),
- un chariot porte-outil (7) pouvant être déplacé sur le bâti de machine (1) dans le sens x,
- - qui présente un second porte-outil (33) réalisé pour la réception au moins d'un outil (34), pouvant être déplacé dans le sens z,
- une ébauche (11) à usiner étant usinée au moyen d'au moins un outil (15, 41) maintenu dans le premier porte-outil (14) sur son côté inférieur et étant pourvue d'une rainure saignée (42) de manière à laisser une nervure mince (43),
- le chariot porte-pièce (4) étant déplacé avec l'ébauche (11) par le biais de la seconde broche porte-pièce (25) fixe,
- l'ébauche (11) étant serrée au-dessous de la rainure (42) dans le second dispositif de serrage de pièces (26),
- la première broche porte-pièce (20) et la seconde broche porte-pièce (25) étant entraînées à une vitesse de rotation différente de telle manière qu'une pièce (13) soit détachée de l'ébauche (11) en sectionnant la nervure (43) et
- la pièce détachée (13) étant finie au moins au moyen du second porte-outil (33) sur son côté supérieur et
- le chariot porte-pièce (4) étant redéplacé avec l'ébauche (11) vers le premier porte-outil (14) pour la réalisation d'une autre étape d'usinage.

2. Procédé selon la revendication 1, l'ébauche (11) étant réalisée comme une pièce tubulaire et les pièces finies (13) étant des anneaux.
